# EUROPÄISCHE PATENTANMELDUNG

(11) **EP 2 402 096 A1**
(43) Veröffentlichungstag der Anmeldung: **04.01.2012**
(21) Anmeldenummer: 10006804.8
(22) Anmeldetag: 01.07.2010
(51) Int. Cl.: B22F 3/105, B22F 3/11

(54) **Poröse Balkenstruktur**

(71) Anmelder: Siemens Aktiengesellschaft, 80333 München (DE)
(72) Erfinder: Die Erfindernennung liegt noch nicht vor

(57) **Zusammenfassung**

Durch die neuartige Struktur von übereinander gestapelten Balken entsteht ein hochporöses und effektives poröses System.

## Beschreibung

Die Erfindung betrifft eine poröse Balkenstruktur.

Poröse Strukturen werden für viele Zwecke hergestellt. Ein aktuelles Herstellungsverfahren für solche Strukturen sind Rapid-Prototype-Verfahren, um solche hochporösen, metallischen Strukturen herzustellen.

Dabei wird eine Pulverschicht durch einen Laser lokal aufgeschmolzen oder gesintert. Auf diese erste und teilweise verdichtete Schicht gelangt eine zweite Pulverschicht, die dann wieder selektiv durch den Laser verdichtet wird.

Dabei kann entweder die gesamte Struktur aus einem porösen Material hergestellt werden oder nur ein äußerer Schichtbereich weist eine poröse Schichtstruktur auf.

Es gilt die poröse Struktur weiterhin zu verbessern und insbesondere auf Turbinenschaufeln anzupassen.

Die Aufgabe wird gelöst durch eine poröse Struktur gemäß Anspruch 1 und durch ein Verfahren gemäß Anspruch 15.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2, 3, 4, 5, 6: Ausführungsbeispiele der Erfindung,
- Figur 7: eine Turbinenschaufel,

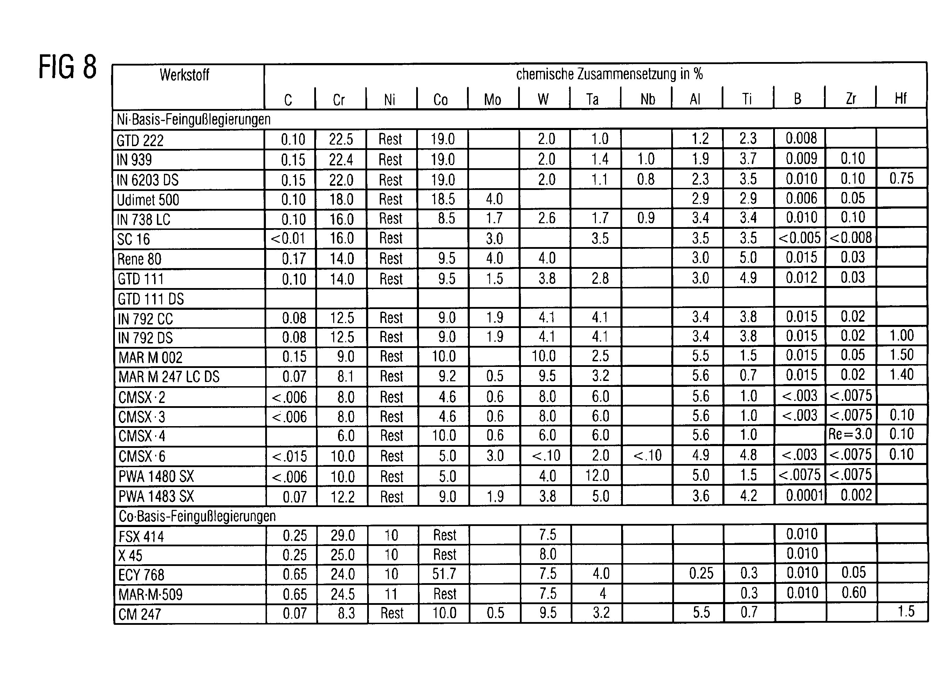

- Figur 8: eine Liste von Superlegierungen.

Die Zeichnungen und Beschreibungen stellen nur Ausführungsbeispiele der Erfindung dar.

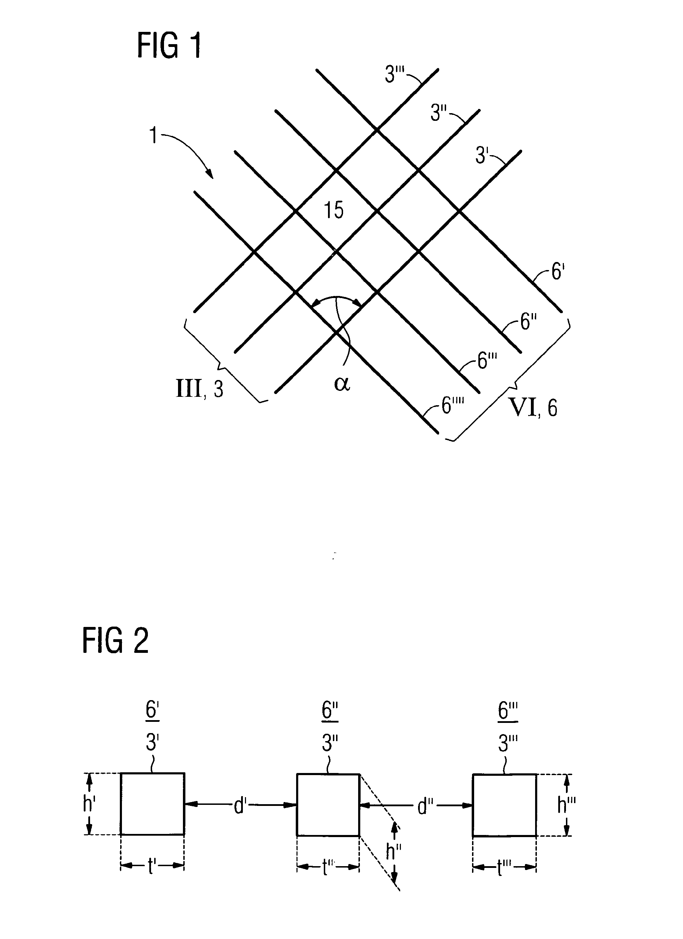

Figur 1 zeigt schematisch die Struktur einer porösen Struktur 1 aus balkenförmigen Elementen 3', 3", ..., 6', 6", ....

In der Folge werden der Einfachheit halber diese nur Balken 3', 3", ..., 6', 6" genannt. Ein Balken ist länglich ausgebildet und insbesondere quaderförmig oder ein Quader.

Die unterste Ebene III der Struktur 1 eines massiven Materials oder einer Schicht wird durch Balkenelemente 3, 3', 3", 3''', ... gebildet.

Eine Ebene bedeutet generell, dass diese Ebene den gleichen Abstand zu einer äußeren Oberfläche aufweist.

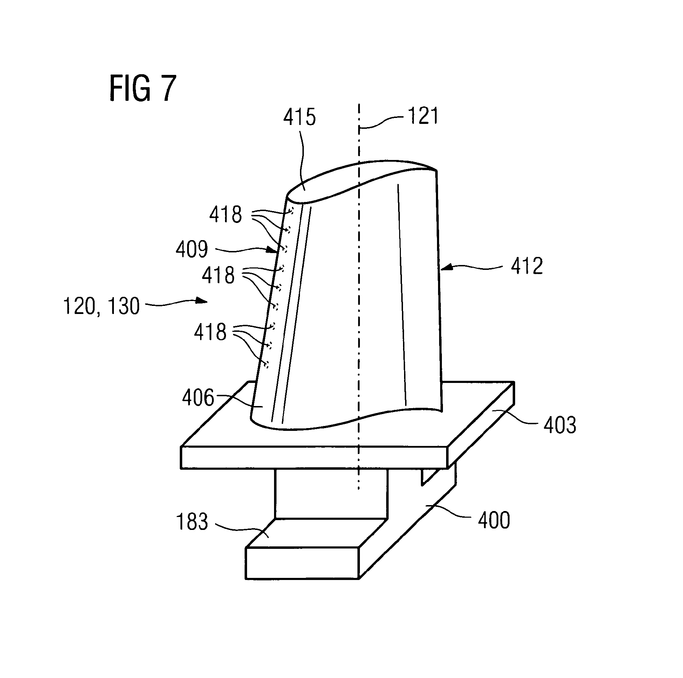

So kann eine Ebene auch gekrümmt verlaufen, wenn das Bauteil eine gekrümmte Oberfläche aufweist, wie bei einem Schaufelblatt 406 einer Turbinenschaufel 120, 130 (Fig. 7).

Die Ebene entspricht insbesondere auch der Pulverschicht, die beim Herstellungsverfahren verdichtet wird.

Diese Struktur 1 ist vorzugsweise dadurch entstanden, dass in einer Schicht aus einem Pulver in einer gewissen Schichtdicke entlang Streifen das Pulver verdichtet wurde, wobei der Streifen für eine gewisse Dicke (Fig. 2) steht, die vorzugsweise die Dicke t', t'', ... der Balken 3', 3'', ... darstellt.

Die Schichtdicke des Pulvers korrespondiert mit der Höhe h', h", ... (Fig. 2) des Balken 3', 3'', ....

Ein Balken kann auch mittels mehrerer zu verdickenden Pulverschichten eine beliebige Höhe erreichen.

Die Dicke t', t", ... kann durch die Breite des Laserstrahls oder des verdichtenden Energiestrahls eingestellt werden oder durch direktes Verdichten neben einer verdichteten Linie variiert werden.

Um eine poröse Struktur zu erzielen, verbleibt ein von Null verschiedener Abstand d', d", ... zwischen den einzelnen Balken 3', 3", .... Diese bilden eine Ebene III mit Balken 3', 3'', ....

Auf diese so behandelte Ebene III wird eine neue Pulverschicht aufgebracht, die ebenfalls mit einem Laser selektiv verdichtet wird. So werden die Balken der einzelnen Ebenen miteinander verbunden.

Weitere Rapid-Prototyp-Verfahren sind denkbar.

Dabei wird vorzugsweise unter einem von 0° verschiedenen Winkel α eine zweite Ebene VI entlang Streifen selektiv verdichtet, wenn nicht die Höhe h', h", ... (Fig. 2) der Balken 3', 3", ... der vorherigen Ebene III erhöht werden soll.

Die so entstehenden Balken 6, 6', 6", ... bilden die nächste Ebene VI.

Die Balken 6', 6", ... weisen ebenfalls einen Abstand d', d", ... untereinander auf, so dass eine gewisse, einstellbare Porosität entsteht. Durch den Zwischenraum der Balken zweier benachbarter, direkt übereinanderliegenden Ebenen III, VI, III', ... ist es möglich, dass ein Kühlmedium, insbesondere Kühlluft, durch die Ebenen III, VI, ... hindurchströmen kann. Je nach dem, ob ein massives Material oder eine Schicht hergestellt werden soll, wird die Prozedur hier wiederholt.

Figur 2 zeigt solche Balken 3', 3", ... mit den Abständen d', d'', ... untereinander und den Dicken der Balken t', t'', .... Innerhalb einer Ebene III, VI, III', ... können sowohl die Abstände d', d'', ... sowie die Dicken t', t'', ... der Balken 3', 3'', ..., 6', 6'', ... variiert werden, um lokale Porositäten oder Porositätsgradienten einzustellen.

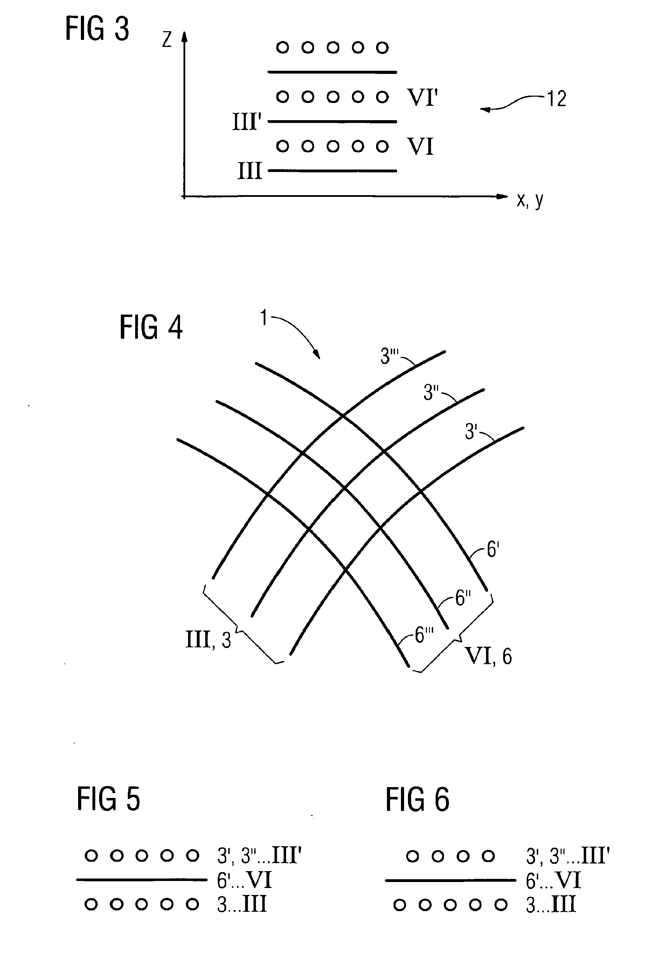

Dies gilt ebenso für eine Anordnung 12 gemäß Figur 3, bei der in Z-Richtung gesehen die Parameter Dicke t', t", ..., Abstand d', d'', ... und/oder Höhe h', h'', ... variiert werden können, um die Porosität oder einen Gradienten in der Porosität entlang der Z-Richtung oder in der XY-Ebene einzustellen.

Wie in Figur 4 dargestellt, können die Balken 3, 3', 3", ..., 6, 6', 6", ... gemäß den Figuren 1, 2, 3 auch gekrümmt verlaufen.

Figur 5 zeigt ein Ausführungsbeispiel einer Anordnung von Balken 3', 3", ... oder gemäß Figuren 1, 2, 3 einer solchen porösen Struktur 1.

Nach den ersten beiden Ebenen III, VI wird eine weitere Schicht III' aus Balken 3', 3", ... erzeugt, die direkt über den Balken der vorvorherigen Ebene III verlaufen.

Die Anordnung der Balken gemäß Figur 5 kann jedoch variiert werden, wie es in Figur 6 gezeigt ist.

Dabei liegen die Balken 3', 3", ... der zweiten Ebene III' mit in einer Richtung verlaufenden Balken 3', 3", ... nicht direkt über Balken der vorvorherigen Ebene III, sondern dazwischen. Dies kann in den einzelnen Ebenen beliebig variiert werden. Ebenso kann die Anordnung gemäß der Figuren 5, 6 miteinander kombiniert werden.

Solche Strukturen können vorzugsweise als Schicht oder als massives Bauteil, vorzugsweise zur Effusionskühlung ausgeführt werden, insbesondere bei Turbinenschaufeln 120, 130. Hier kann lokal an heißeren Stellen eine höhere Porosität eingestellt werden. Dies kann vorzugsweise der Bereich, also die Wand um die Anströmkante 409 sein, der gegenüber der Druck- oder Saugseite eine höhere Porosität aufweist.

Dabei kann vorzugsweise auch eben in diesen verschiedenen Bereichen zusätzlich ein Porositätsgradient in Z-Richtung gegeben sein.

An verschiedenen Stellen wird also vorzugsweise in der XY-Ebene ein Porositätsgradient eingestellt, um sich den verschiedenen Kühlanforderungen zu stellen.

Die Kühlung kann durch die Effusionskühlung erreicht werden, indem ein Medium durch die poröse Struktur hinausströmt oder vorzugsweise auch durch Kühlkanäle, die einen unteren inneren Anteil und an der Oberfläche einen Diffusor aufweisen, wie es von Filmkühllöchern von massiven Körpern, Schichten bekannt ist.

Ebenso kann die Turbinenschaufel 120, 130 ein inneres Metall (massiv oder porös gemäß der Erfindung) aufweisen und außen Keramik massiv oder porös aufweisen.

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei auch durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10A1-0,4Y-1,5Re.

Auf der MCrAIX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAIX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht und kann Poren und Kanäle ähnlich der oben beschriebenen porösen Balkenstruktur aufweisen.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Poröse Struktur (1),
die aus balkenförmigen Elementen (3', 3'', ..., 6', 6'', ...) aufgebaut ist,
die insbesondere nur aus balkenförmigen Elementen (3', 3", ..., 6', 6'', ...) besteht.

2. Poröse Struktur nach Anspruch 1, bei der die balkenförmigen Elemente (3', 3", ..., 6', 6", ...) geradlinig verlaufen,
die insbesondere nur aus geradlinig verlaufenden, balkenförmigen Elementen (3', 3", ..., 6', 6'', ...) besteht.

3. Poröse Struktur nach Anspruch 1 oder 2,
bei der die balkenförmigen Elemente (3', 3", ..., 6', 6", ...) gekrümmt verlaufen,
die insbesondere nur aus gekrümmt verlaufenden, balkenförmigen Elementen (3', 3", ..., 6', 6", ...) besteht.

4. Poröse Struktur nach Anspruch 1, 2 oder 3,
bei der die Abstände (d', d", d"', ...) der balkenförmigen Elemente (3', 3", ..., 6', 6", ...) und/oder die Dicke (t', t", ...) der balkenförmigen Elemente (3', 3", ..., 6', 6'', ...) in einer Ebene (III, VI, III', VI', ...) variieren.

5. Poröse Struktur nach Anspruch 1, 2, 3 oder 4,
bei der die Abstände (d', d", ...) und/oder die Dicke (t', t", ...) und/oder die Höhe (h', h", ...) der balkenförmigen Elemente (6', 6", ...) in einer Ebene (VI, III', VI', ...) gegenüber einer unteren Lage (III, VI, III', ...) variieren.

6. Poröse Struktur nach Anspruch 1, 2, 3, 4 oder 5,
deren balkenförmige Elemente (3', 3'', ..., 6', 6'', ...) im Querschnitt im Wesentlichen rechteckig,
insbesondere rechteckig sind.

7. Poröse Struktur nach Anspruch 1, 2, 3, 4, 5, oder 6, bei der die balkenförmigen Elemente einer Ebene (III') direkt über den balkenförmige Elementen der vorvorherigen Elemente (III) verlaufen.

8. Poröse Struktur nach Anspruch 1, 2, 3, 4, 5, oder 6, bei der die balkenförmigen Elemente einer Ebene (III') zwischen den balkenförmige Elementen der vorvorherigen Elemente (III) verlaufen.

9. Poröse Struktur nach Anspruch 1, 2, 3, 4, 5, 7 oder 8, deren balkenförmige Elemente (3', 3", ... 6', 6") ein Metall aufweisen,
insbesondere nur aus Metall bestehen.

10. Poröse Struktur nach einem oder mehreren der vorherigen Ansprüche 1 bis 9,
deren balkenförmige Elemente (3', 3", ..., 6', 6") ein keramisches Material aufweisen,
insbesondere nur aus Keramik bestehen.

11. Poröse Struktur nach einem oder mehreren der vorherigen Ansprüche 1 bis 10,
die lokal unterschiedliche Porositäten aufweist, insbesondere an der Oberfläche und
ganz insbesondere an verschiedenen Stellen an der Oberfläche.

12. Poröse Struktur nach einem oder mehreren der vorherigen Ansprüche,
die einen Porositätsgradienten aufweist,
insbesondere in vertikaler Richtung.

13. Poröse Struktur nach einem oder mehreren der vorherigen Ansprüche 1 bis 12,
die eine Schicht darstellt.

14. Poröse Struktur nach einem oder mehreren der vorherigen Ansprüche 1 bis 13,
die einen Massivkörper darstellt.

15. Verfahren zur Herstellung einer porösen Struktur, insbesondere zur Herstellung einer porösen Struktur (1) nach einem oder mehreren der Ansprüche 1 bis 13,
bei dem ein Material in einer Ebene (III) entlang von Streifen verdichtet wird,
wobei zwischen den Streifen ein von Null verschiedener Abstand (d', d") vorhanden ist und
wobei auf der ersten Ebene (III) mit den entlang der Streifen entstandenen balkenförmigen Elemente (3', 3", ...) zumindest eine zweite Ebene (VI) mit Balken (6', 6", ...) erzeugt wird,
die vorzugsweise mit einem von Null verschiedenen Winkel (α) zu den darunter liegenden Balken (3', 3", ...) verlaufen,
wobei die Streifen die balkenförmigen Elemente (3', 3", ..., 6', 6", ...) ergeben.

16. Verfahren nach Anspruch 15,
bei dem ein Prototyping-Verfahren verwendet wird.

17. Verfahren nach Anspruch 15 oder 16,
bei dem ein Laser-Sinter-Verfahren verwendet wird.
